# EUROPÄISCHE PATENTANMELDUNG

(11) **EP 3 651 087 A1**
(43) Veröffentlichungstag der Anmeldung: **13.05.2020**
(21) Anmeldenummer: 18205474.2
(22) Anmeldetag: 09.11.2018
(51) Int. Cl.: G06Q 10/06

(54) **VORRICHTUNG UND VERFAHREN ZUM UMWANDELN VON DATEN AUS EINER DIGITALEN KUNDENSCHNITTSTELLE EINES RECHNERNETZSYSTEMS**

(71) Anmelder: Phoenix Contact GmbH & Co. KG, 32825 Blomberg (DE)
(72) Erfinder: KELLER, Peter, 33813 Oerlinghausen (DE); SCHMIDT, Jörg, 32469 Petershagen (DE); TIEBEN, Matthias, 32105 Bad Salzuflen (DE)
(74) Vertreter: Maiwald Patent- und Rechtsanwaltsgesellschaft mbH

(57) **Zusammenfassung**

Die vorliegende Erfindung betrifft ein Verfahren zum Umwandeln von Daten aus einer digitalen Kundenschnittstelle eines Rechnernetzsystems, wobei das Verfahren die folgenden Verfahrensschritte umfasst: Erfassen (S1) von Standardfunktionen sowohl von beteiligten Systemen des Rechnernetzsystems als auch von der digitalen Kundenschnittstelle; Bestimmen (S2) von semantischen Beziehungen zwischen den erfassten Standardfunktionen; und Durchführen (S3) einer Orchestrierung in der Form eines flexiblen Kombinierens der erfassten Standardfunktionen basierend auf den bestimmten semantischen Beziehungen zu einer Datenkomposition für interne Material- und/oder Werteflüsse.

## Beschreibung

### Technisches Gebiet

Die vorliegende Erfindung betrifft Systeme für die Datentransformation durch standardisierte Transformationsprozesse und entsprechenden Datenmigrationsverfahren für die computerunterstütze Fertigung.

Insbesondere betrifft die vorliegende Erfindung eine Vorrichtung und ein Verfahren zum Umwandeln von Daten aus einer digitalen Kundenschnittstelle eines Rechnernetzsystems.

### Technischer Hintergrund

Daten zu Produkten liegen in einem Unternehmen im Bereich der Produktbeschaffung, der Produktion und der Distribution vor. Eine durchgehende Implementierung einer weitreichenden Datenverfügbarkeit und Datentransformation innerhalb des gesamten Rechnernetzsystems eines Unternehmens ist nur schwer möglich.

### Zusammenfassung der Erfindung

Es ist eine Aufgabe der vorliegenden Erfindung, eine verbesserte Vorrichtung und ein verbessertes Verfahren zum Umwandeln von Daten aus einer digitalen Kundenschnittstelle eines Rechnernetzsystems bereitzustellen.

Diese Aufgabe wird durch die Gegenstände der unabhängigen Patentansprüche gelöst. Weiterbildungen und Ausführungsformen sind den abhängigen Patentansprüchen, der Beschreibung und den

Figuren der Zeichnungen zu entnehmen.

Ein erster Aspekt der vorliegenden Erfindung betrifft ein Verfahren zum Umwandeln von Daten aus einer digitalen Kundenschnittstelle eines Rechnernetzsystems, wobei das Verfahren die folgenden Verfahrensschritte umfasst.

Als ein erster Verfahrensschritt erfolgt ein Erfassen von Standardfunktionen sowohl von beteiligten Systemen des Rechnernetzsystems als auch von der digitalen Kundenschnittstelle.

Als ein zweiter Verfahrensschritt erfolgt ein Bestimmen von semantischen Beziehungen zwischen den erfassten Standardfunktionen. Die erfassten Standardfunktionen umfassen Standardfunktionen der beteiligten Systeme des Rechnernetzsystems sowie Standardfunktionen der digitalen Kundenschnittstelle.

Als ein dritter Verfahrensschritt erfolgt ein Durchführen einer Orchestrierung in der Form eines flexiblen Kombinierens der erfassten Standardfunktionen basierend auf den bestimmten semantischen Beziehungen zu einer Datenkomposition für interne Material- und/oder Werteflüsse.

Die vorliegende Erfindung ermöglicht, Daten aus einem Produktkonfigurator per Transformationsmodell in standardisierte interne Material- und Werteflüsse umzuwandeln.

Die vorliegende Erfindung ermöglicht, dass in adaptierter und angepasster Weise auf verschiedene Konfigurationsszenarien reagiert werden kann, etwa kann das Verfahren unterschiedliche Modi einschalten, etwa einen Standard- und/oder einen Simulationsmodus, um etwa verschiedene Aufgaben im Transformationsmodell auszuführen.

Das Transformationsmodell überträgt automatisiert umfangreiche Datenpakete in nahezu alle für die Auftragsabwicklung und Fertigung eines Produktes relevanten Systeme und stellt damit eine Kerntechnologie zur intelligenten Produktion dar.

Das Verfahren nutzt dabei keine eigene Programmlogik, sondern arbeitet zum einen auf semantischen Beziehungen, die in den Standardfunktionen der beteiligten Systeme vorliegt, ein Webkonfigurator, ein Webshop, ein Simulationssystem, Enterprise-Resource-Planning-System, ein Produktionsleitsystem, oder ein Montagehilfsautomat Dadurch entstehen insbesondere im Kontext Industrie 4.0 eine Reihe von Verbesserungen.

Die vorliegende Erfindung ermöglicht vorteilhaft, die Standardisierung von Abläufen auch in heterogenen IT-Infrastrukturen, die Gewährleistung digitale Durchgängigkeit zu realisieren.

Die vorliegende Erfindung ermöglicht vorteilhaft, dass jede beliebige konfigurierte Lösung auch digital und unmittelbar bestellbar ist, auch wenn diese bisher in den Fertigungssystemen noch nicht produziert wurde und als solche noch nicht existiert.

Durch die Automatisierung der Materialanlage während des Bestellvorgangs werden die internen Aufwände deutlich reduziert und die Durchlaufzeiten für Fertigungsaufträge werden deutlich minimiert.

Durch Standardisierung und Automatisierung verbessert sich die Datenqualität im Unternehmen. Das Transformationsmodell umfasst ein Verfahren zur Umwandlung von Daten aus der digitalen Kundenschnittstelle, auch als Webkonfigurator bezeichnet, in standardisierte interne Material- und Werteflüsse, um damit die automatisierte Steuerung von Maschinen, Anlagen, Produktionsprozessen zu steuern.

Vorteilhafte Ausgestaltungen der vorliegenden Erfindung sind den Unteransprüchen zu entnehmen.

In einer vorteilhaften Ausführungsform der vorliegenden Erfindung ist vorgesehen, dass als die beteiligten Systeme: ein Webkonfigurator, ein Webshop, ein Simulationssystem, Enterprise-Resource-Planning-System, ein Produktionsleitsystem, oder ein Montagehilfsautomat verwendet werden.

In einer vorteilhaften Ausführungsform der vorliegenden Erfindung ist vorgesehen, dass die Datenkomposition für die interne Material- und/oder Werteflüsse an die beteiligten Systeme und/oder an die digitale Kundenschnittstelle übertragen wird.

In einer vorteilhaften Ausführungsform der vorliegenden Erfindung ist vorgesehen, dass das Durchführen der Orchestrierung die Anwendung einer Datentransformation auf die erfassten Standardfunktionen umfasst.

In einer vorteilhaften Ausführungsform der vorliegenden Erfindung ist vorgesehen, dass basierend auf der Datenkomposition für die internen Material- und/oder Werteflüsse eine automatisierte Steuerung von mit dem Rechnernetzsystem gekoppelten Produktionsmaschinen oder Produktionsanlagen erfolgt.

In einer vorteilhaften Ausführungsform der vorliegenden Erfindung ist vorgesehen, dass das flexible Kombinieren der erfassten Standardfunktionen basierend auf den bestimmten semantischen Beziehungen zu der Datenkomposition für interne Material- und/oder Werteflüsse bei Abschluss eines Bestellvorgangs der digitalen Kundenschnittstelle erfolgt.

In einem zweiten Aspekt der vorliegenden Erfindung ist eine Vorrichtung zum Umwandeln von Daten aus einer digitalen Kundenschnittstelle eines Rechnernetzsystems vorgesehen, wobei die Vorrichtung ein Erfassungsmodul, ein Semantikmodul, und ein Orchestrierungsmodul umfasst:
Das Erfassungsmodul ist dazu ausgebildet, Standardfunktionen sowohl von beteiligten Systemen des Rechnernetzsystems als auch von der digitalen Kundenschnittstelle zu erfassen.

Das Semantikmodul ist dazu ausgebildet, semantischen Beziehungen zwischen den erfassten Standardfunktionen zu bestimmen. Die erfassten Standardfunktionen umfassen Standardfunktionen der beteiligten Systeme des Rechnernetzsystems sowie Standardfunktionen der digitalen Kundenschnittstelle.

Das Orchestrierungsmodul ist dazu ausgebildet, eine Orchestrierung durchzuführen in der Form eines flexiblen Kombinierens der erfassten Standardfunktionen basierend auf den bestimmten semantischen Beziehungen zu einer einzigen Datenkomposition für interne Material- und/oder Werteflüsse. Mit anderen Worten ausgedrückt, es erfolgt eine Fusion der der erfassten Standardfunktionen mittels der bestimmten semantischen Beziehungen zu einer hybriden Datenkomposition, welche im gesamten Rechnernetzsystem als Grundlage für eine Datenverarbeitung dient.

In einer vorteilhaften Ausführungsform der vorliegenden Erfindung ist vorgesehen, dass die Vorrichtung ferner ein Datenübertragungsmodul aufweist, welches dazu ausgebildet ist, die Datenkomposition für die interne Material- und/oder Werteflüsse an die beteiligten Systeme und/oder an die digitale Kundenschnittstelle zu übertragen.

In einer vorteilhaften Ausführungsform der vorliegenden Erfindung ist vorgesehen, dass die Vorrichtung ferner dazu ausgebildet ist, in einem Standardmodus oder in einem Simulationsmodus betrieben zu werden.

In einer vorteilhaften Ausführungsform der vorliegenden Erfindung ist vorgesehen, dass die Vorrichtung ferner dazu ausgebildet ist, dass das flexible Kombinieren der erfassten Standardfunktionen basierend auf den bestimmten semantischen Beziehungen zu der Datenkomposition für interne Material- und/oder Werteflüsse bei Abschluss eines Bestellvorgangs der digitalen Kundenschnittstelle erfolgt.

In einem dritten Aspekt der vorliegenden Erfindung ist ein Rechnernetzsystem vorgesehen, umfassend die Vorrichtung gemäß dem zweiten Aspekt der vorliegenden Erfindung auszuführen

In einem vierten Aspekt der vorliegenden Erfindung ist ein Computerprogramm oder Computerprogrammprodukt vorgesehen, umfassend Befehle, die bei der Ausführung des Programms durch einen Computer diesen veranlassen, die Schritte des Verfahrens zum Umwandeln von Daten aus einer digitalen Kundenschnittstelle eines Rechnernetzsystems gemäß dem ersten Aspekt der vorliegenden Erfindung auszuführen.

In einem fünften Aspekt der vorliegenden Erfindung ist ein Computerlesbares (Speicher)medium vorgesehen, umfassend Befehle, die bei der Ausführung durch einen Computer diesen veranlassen, die Schritte des Verfahrens zum Umwandeln von Daten aus einer digitalen Kundenschnittstelle eines Rechnernetzsystems gemäß dem ersten Aspekt der vorliegenden Erfindung auszuführen.

Die beschriebenen Ausgestaltungen und Weiterbildungen lassen sich beliebig miteinander kombinieren.

Weitere mögliche Ausgestaltungen, Weiterbildungen und Implementierungen der vorliegenden Erfindung umfassen auch nicht explizit genannte Kombinationen von zuvor oder im Folgenden bezüglich der Ausführungsformen beschriebenen Merkmale der vorliegenden Erfindung.

Die beiliegenden Zeichnungen sollen ein weiteres Verständnis der Ausführungsformen der vorliegenden Erfindung vermitteln.

Die beiliegenden Zeichnungen veranschaulichen Ausführungsformen und dienen im Zusammenhang mit der Beschreibung der Erklärung von Konzepten der vorliegenden Erfindung.

Andere Ausführungsformen und viele der genannten Vorteile ergeben sich im Hinblick auf die Figuren der Zeichnungen. Die dargestellten Elemente der Figuren der Zeichnungen sind nicht notwendigerweise maßstabsgetreu zueinander gezeigt.

### Kurze Beschreibung der Figuren

Es zeigen:
- Fig. 1:: eine schematische Darstellung einer Vorrichtung zum Umwandeln von Daten aus einer digitalen Kundenschnittstelle eines Rechnernetzsystems gemäß einem Ausführungsbeispiel der vorliegenden Erfindung;
- Fig. 2:: eine schematische Darstellung eines Flussdiagramms eines Verfahrens zum Umwandeln von Daten aus einer digitalen Kundenschnittstelle eines Rechnernetzsystems gemäß einem Ausführungsbeispiel der vorliegenden Erfindung; und
- Fig. 3:: eine schematische Darstellung einer Prozessvisualisierung eines Verfahrens zum Umwandeln von Daten aus einer digitalen Kundenschnittstelle eines Rechnernetzsystems gemäß einem Ausführungsbeispiel der vorliegenden Erfindung.

### Detaillierte Beschreibung der Ausführungsbeispiele

In den Figuren der Zeichnungen bezeichnen gleiche Bezugszeichen gleiche oder funktionsgleiche Elemente, Bauteile, Komponenten oder Verfahrensschritte, soweit nichts Gegenteiliges angegeben ist.

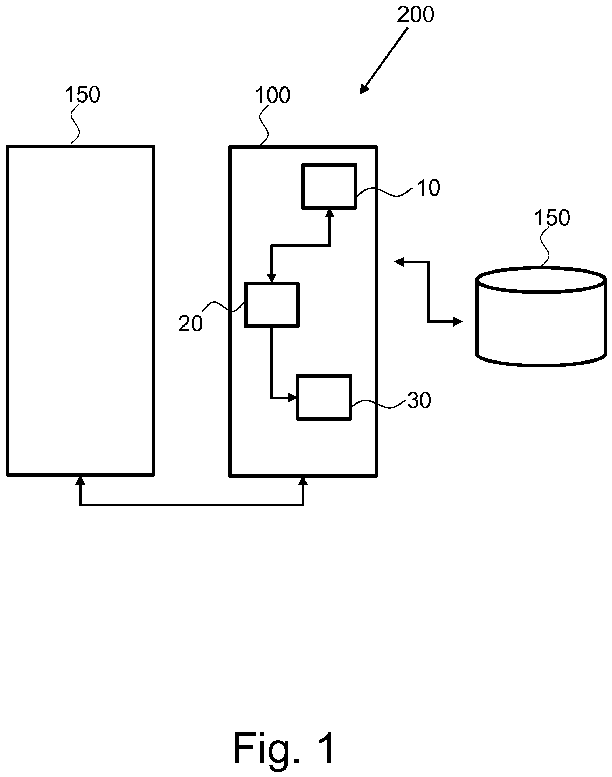

Die Fig. 1 zeigt eine schematische Darstellung einer Vorrichtung zum Umwandeln von Daten aus einer digitalen Kundenschnittstelle eines Rechnernetzsystems gemäß einem Ausführungsbeispiel der vorliegenden Erfindung.

Die Fig. 1 zeigt ein Rechnernetzsystem 200, welches weitere Netzwerkrechner 150 aufweist, wobei das Rechnernetzsystem 200 mit der Vorrichtung 100 gekoppelt ist, wobei das Rechnernetzsystem 200 beispielsweise in einem Ausführungsbeispiel einen Webkonfigurator, einen Webshop, ein Simulationssystem, Enterprise-Resource-Planning-System, ein Produktionsleitsystem, oder einen Montagehilfsautomat umfasst.

Die Vorrichtung 100 umfasst ein Erfassungsmodul 10, ein Semantikmodul 20, und ein Orchestrierungsmodul 30.

Das Erfassungsmodul 10 ist dazu ausgebildet, Standardfunktionen sowohl von beteiligten Systemen des Rechnernetzsystems als auch von der digitalen Kundenschnittstelle zu erfassen.

Das Semantikmodul 20 ist dazu ausgebildet, semantischen Beziehungen zwischen den erfassten Standardfunktionen zu bestimmen. Die erfassten Standardfunktionen umfassen Standardfunktionen der beteiligten Systeme des Rechnernetzsystems sowie Standardfunktionen der digitalen Kundenschnittstelle.

Das Orchestrierungsmodul 30 ist dazu ausgebildet, eine Orchestrierung durchzuführen in der Form eines flexiblen Kombinierens der erfassten Standardfunktionen basierend auf den bestimmten semantischen Beziehungen zu einer einzigen Datenkomposition für interne Material- und/oder Werteflüsse.

Die Orchestrierung kann dabei wie folgt durchgeführt werden:
Eine Orchestrierung kann dazu ausgebildet werden, eine durch den Konfigurator erzeugte Bilddatei während einer Konfiguration vom CAD-Server abgeholt und im einem Datenbanksystem automatisch abgelegt wird.

Es wird also beispielsweise eine Konfiguration durchgeführt, das Konfigurationsergebnis startet einen Prozess, das Konfigurationsergebnis wird beispielsweise vom Konfigurator abgeholt und das Konfigurationsergebnis wird in zentraler Datenbank abgelegt.

Die Materialanlage wird beispielsweise automatisiert freigegeben und das Material wird beispielsweise im Teamcenter angelegt und die Produktabbildung wird beispielsweise in das Datenbanksystem automatisch eingespielt.

Gemäß einem Ausführungsbeispiel der vorliegenden Erfindung, meldet der Kunde sich mit seinem User-Login in der Kundenschnittstelle des Erfassungsmoduls 10 an und konfiguriert sein Produkt in kundenindividueller Art und Weise.

Gemäß einem Ausführungsbeispiel der vorliegenden Erfindung werden auf Anfrage mit den Daten der Kundenschnittstelle und des Konfigurators eine Verkaufsbeleganlage - d.h. die Generierung eines Verkaufsbeleges - simulativ ausgeführt, um die kundenspezifischen Informationen wie Preise, Liefertermine - und Mengen in der Kundenschnittstelle dem Benutzer zur Ansicht zu bringen.

Gemäß einem Ausführungsbeispiel der vorliegenden Erfindung, wenn mit dem Konfigurationsergebnis kein in der Referenzdatenbank definiertes Produkt gefunden wird, nutzt das Verfahren für die Übergabe an die Verkaufsbelegsimulation ein konfigurierbares Material das eindeutig über Merkmale und Merkmalwerte beschrieben wird.

Gemäß einem Ausführungsbeispiel der vorliegenden Erfindung, für den Fall, dass das Konfigurationsergebnis eine Liste von Materialien ist, die mit einem Kopfmaterial zusammengehalten werden sollen, wird ebenfalls die Existenz in der Referenzdatenbank geprüft.

Gemäß einem Ausführungsbeispiel der vorliegenden Erfindung, wenn diese Kombination von Artikeln nicht vorliegt, wird beispielsweise das Kopfmaterial als Kopie eines Nichtlagermaterials angelegt und die Komponenten als Vertriebsstückliste zugeordnet.

Gemäß einem Ausführungsbeispiel der vorliegenden Erfindung, wenn der User das Konfigurationsergebnis sichert, reserviert das Verfahren im PLM-Systemeine Materialnummer mit der im späteren Verlauf die Konfiguration wiederauffindbar ist und wiederbestellt werden kann.

Gemäß einem Ausführungsbeispiel der vorliegenden Erfindung, etwa für den Fall, dass der User ein Angebot basierend auf einer nicht vorhandenen Konfiguration anfragt, wird zunächst weiter mit dem konfigurierbaren Material gearbeitet, das Programm gibt zum Kunden jedoch die reservierte Materialnummer aus.

Gemäß einem Ausführungsbeispiel der vorliegenden Erfindung, wenn das Angebot zu einem Auftrag geändert wird, startet die Datenaufbereitung des verkaufsfähigen Artikels. Dazu werden die "statischen Daten" - Repräsentiert eine Basisfamilie - aus dem Vorlagematerial kopiert und die "dynamischen Daten" aus dem Konfigurationsergebnis des Angebots.

Gemäß einem Ausführungsbeispiel der vorliegenden Erfindung wird das Konfigurationsergebnis zusätzlich mit dem Material - Basisdaten 2 des Materialstamms - für die weitere Unterstützung der Folgeprozesse gespeichert. Anschließend wird mit den aufbereiteten Daten im Transformationsmodell die Materialanlage angestoßen.

Gemäß einem Ausführungsbeispiel der vorliegenden Erfindung, wenn der Kunde die Bestellbestätigung schickt, beginnt die Aufbereitung der logistischen Daten. Dazu werden die "statischen Daten" des Vorlagematerials (z.B. Dispo-Sichten) kopiert und anhand der Konfiguration die "dynamischen Daten" generiert, wie z.B. Stückliste und Arbeitsplan

Gemäß einem Ausführungsbeispiel der vorliegenden Erfindung werden die folgenden Schritte für jede Konfiguration ausgeführt:
i.) Die Liste der Materialnummern (d. h. die konfigurierten Komponenten) wird aus der Web-Konfigurations-Software extrahiert;
ii.) Simulationsmodus: Preis, Gewichte, Volumen, und weitere Artikeleigenschaften zu extrahieren und Ergebnisse im Webshop anzuzeigen;
iii.) Zuordnen der Materialnummer im Teamcenter und speichern der Materialnummer in der Konfiguration; und
iv.) Ausführungsmodus: Anlegen eines Kundenauftrags, der den konfigurierten Artikel in SAP fortsetzt

Gemäß einem Ausführungsbeispiel der vorliegenden Erfindung beschreibt die Spezifikation des konfigurierten Artikels die benötigte Funktionalität nach Schritt iv.) wie oben dargestellt.

Mit anderen Worten ausgedrückt, ein Verkaufsbeleg, wie ein Auftrag oder eine Anfrage, existiert mit mindestens einer konfigurierten Position, d.h. es existiert eine Nummer für den Verkaufsbeleg und mindestens für eine Position.

Gemäß einem Ausführungsbeispiel der vorliegenden Erfindung umfasst die erforderliche Funktionalität die automatische Erstellung von beispielsweise zu definierenden Eigenschaften, wie etwa:
- Material-Master;
- Änderungen des Material-Masters.

Gemäß einem Ausführungsbeispiel der vorliegenden Erfindung bestimmt das Verfahren eine Lösung für die Entscheidung: Profil ändern, das in der Konfiguration verfügbar ist, aber als Vorlage zum Erstellen eines neuen Änderungsstammsatzes mit beispielsweise dem Vermerk "Gültig-ab-Datum = aktuelles Datum"

Gemäß einem Ausführungsbeispiel der vorliegenden Erfindung können weitere konfigurierte Daten im Profil definiert sein durch:
- Produktionsstückliste; und/oder
- Routing; und/oder
- Preis Konditionssatz; und/oder
- Verkaufspreis; und/oder
- Kalkulation von Produktionskosten des Artikels; und/oder
- Erstellung von Accounting Views, wobei dies beispielsweise den Aufruf des Programms zur Validierung beinhaltet.

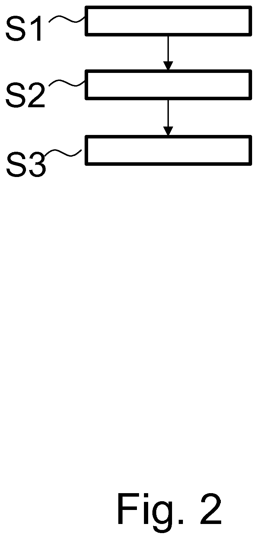

Die Fig. 2 eine schematische Darstellung eines Flussdiagramms eines Verfahrens zum Umwandeln von Daten aus einer digitalen Kundenschnittstelle eines Rechnernetzsystems gemäß einem Ausführungsbeispiel der vorliegenden Erfindung.

Als ein erster Verfahrensschritt erfolgt ein Erfassen S1 von Standardfunktionen sowohl von beteiligten Systemen des Rechnernetzsystems als auch von der digitalen Kundenschnittstelle.

Als ein zweiter Verfahrensschritt erfolgt ein Bestimmen S2 von semantischen Beziehungen zwischen den erfassten Standardfunktionen.

Als ein dritter Verfahrensschritt erfolgt ein Durchführen S3 einer Orchestrierung in der Form eines flexiblen Kombinierens der erfassten Standardfunktionen basierend auf den bestimmten semantischen Beziehungen zu einer Datenkomposition für interne Material- und/oder Werteflüsse.

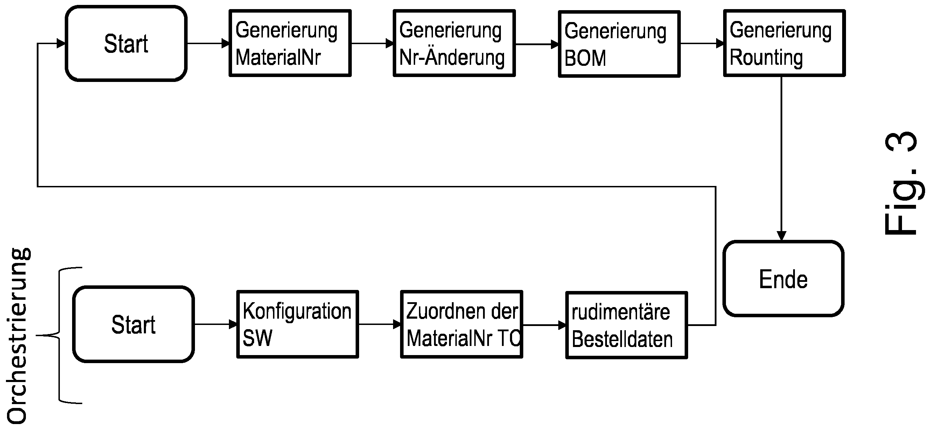

Die Fig. 3 zeigt eine schematische Darstellung einer Prozessvisualisierung eines Verfahrens zum Umwandeln von Daten aus einer digitalen Kundenschnittstelle eines Rechnernetzsystems gemäß einem Ausführungsbeispiel der vorliegenden Erfindung.

Der in der Fig. 3 dargestellte Gesamtprozess umfasst einen Softwaremodulprozess, dargestellt in der rechten Spalte, und einen Orchestrierungsprozess, dargestellt in der linken Spalte.

Der Orchestrierungsprozess kann beispielsweise einen Auslösemechanismus aufweisen, wobei der Report aufgerufen wird, wenn ein neuer Verkaufsbeleg vorhanden ist.

Der Orchestrierungsprozess kann beispielsweise eine Startbedingung aufweisen, etwa, dass ein Verkaufsbeleg mit einem konfigurierten Produkt angelegt wird, und die Konfiguration steht als Position im Beleg zur Verfügung.

Der Orchestrierungsprozess kann beispielsweise als ein Überwachungsprozess ausgebildet sein.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Ergänzend sei darauf hingewiesen, dass "umfassend" und "aufweisend" keine anderen Elemente oder Schritte ausschließt und "eine" oder "ein" keine Vielzahl ausschließt.

## Patentansprüche

1. Verfahren zum Umwandeln von Daten aus einer digitalen Kundenschnittstelle eines Rechnernetzsystems, wobei das Verfahren die folgenden Verfahrensschritte umfasst:
- Erfassen (S1) von Standardfunktionen sowohl von beteiligten Systemen des Rechnernetzsystems als auch von der digitalen Kundenschnittstelle;
- Bestimmen (S2) von semantischen Beziehungen zwischen den erfassten Standardfunktionen; und
- Durchführen (S3) einer Orchestrierung in der Form eines flexiblen Kombinierens der erfassten Standardfunktionen basierend auf den bestimmten semantischen Beziehungen zu einer Datenkomposition für interne Material- und/oder Werteflüsse.

2. Verfahren nach Patentanspruch 1,
wobei als die beteiligten Systeme: ein Webkonfigurator, ein Webshop, ein Simulationssystem, Enterprise-Resource-Planning-System, ein Produktionsleitsystem, oder ein Montagehilfsautomat verwendet werden.

3. Verfahren nach Patentanspruch 1 oder 2,
wobei die Datenkomposition für die interne Material- und/oder Werteflüsse an die beteiligten Systeme und/oder an die digitale Kundenschnittstelle übertragen wird.

4. Verfahren nach einem der vorherigen Patentansprüche,
wobei das Durchführen der Orchestrierung die Anwendung einer Datentransformation auf die erfassten Standardfunktionen umfasst.

5. Verfahren nach einem der vorherigen Patentansprüche,
wobei basierend auf der Datenkomposition für die internen Material- und/oder Werteflüsse eine automatisierte Steuerung von mit dem Rechnernetzsystem gekoppelten Produktionsmaschinen oder Produktionsanlagen erfolgt.

6. Verfahren nach einem der vorherigen Patentansprüche,
wobei das flexible Kombinieren der erfassten Standardfunktionen basierend auf den bestimmten semantischen Beziehungen zu der Datenkomposition für interne Material- und/oder Werteflüsse bei Abschluss eines Bestellvorgangs der digitalen Kundenschnittstelle erfolgt.

7. Vorrichtung (100) zum Umwandeln von Daten aus einer digitalen Kundenschnittstelle eines Rechnernetzsystems, wobei die Vorrichtung umfasst:
- ein Erfassungsmodul (10), welches dazu ausgebildet ist, Standardfunktionen sowohl von beteiligten Systemen des Rechnernetzsystems als auch von der digitalen Kundenschnittstelle zu erfassen;
- ein Semantikmodul (20), welches dazu ausgebildet ist, semantischen Beziehungen zwischen den erfassten Standardfunktionen zu bestimmen;
- ein Orchestrierungsmodul (30), welches dazu ausgebildet ist, eine Orchestrierung durchzuführen in der Form eines flexiblen Kombinierens der erfassten Standardfunktionen basierend auf den bestimmten semantischen Beziehungen zu einer Datenkomposition für interne Material- und/oder Werteflüsse.

8. Vorrichtung nach Patentanspruch 7,
wobei die Vorrichtung ferner ein Datenübertragungsmodul aufweist, welches dazu ausgebildet ist, die Datenkomposition für die interne Material- und/oder Werteflüsse an die beteiligten Systeme und/oder an die digitale Kundenschnittstelle zu übertragen.

9. Vorrichtung nach Patentanspruch 7 oder 8,
wobei die Vorrichtung ferner dazu ausgebildet ist, in einem Standardmodus oder in einem Simulationsmodus betrieben zu werden.

10. Vorrichtung nach einem der Patentansprüche 7 bis 9,
wobei die Vorrichtung ferner dazu ausgebildet ist, dass das flexible Kombinieren der erfassten Standardfunktionen basierend auf den bestimmten semantischen Beziehungen zu der Datenkomposition für interne Material- und/oder Werteflüsse bei Abschluss eines Bestellvorgangs der digitalen Kundenschnittstelle erfolgt.

11. Rechnernetzsystem (200), umfassend eine Vorrichtung nach einem der Patentansprüche 7 bis 10.

12. Rechnernetzsystem (200) nach Patentanspruch 11,
wobei das Rechnernetzsystem einen Webkonfigurator, einen Webshop, ein Simulationssystem, Enterprise-Resource-Planning-System, ein Produktionsleitsystem, oder einen Montagehilfsautomat umfasst.

13. Rechnernetzsystem (200) nach Patentanspruch 11 oder 12,
wobei das Rechnernetzsystem als ein heterogenes IT-System ausgebildet ist.
